# EUROPÄISCHE PATENTSCHRIFT

(11) **EP 4 072 807 B1**
(45) Veröffentlichungstag und Bekanntmachung des Hinweises auf die Patenterteilung: **29.11.2023**
(21) Anmeldenummer: 20800579.3
(22) Anmeldetag: 26.10.2020
(51) Int. Cl.: B28B 17/00, G01N 21/95, G01S 17/42, G01S 17/88, G01S 17/89, G06F 18/2431, G06Q 10/0639, G06Q 50/04, G06V 20/00

(54) **COMPUTERGESTÜTZTES VERFAHREN UND STEUEREINRICHTUNG ZUR BESTIMMUNG EINER SICHTBETONQUALITÄT**
COMPUTER-SUPPORTED METHOD AND CONTROL DEVICE FOR DETERMINING A QUALITY OF EXPOSED CONCRETE
PROCÉDÉ ASSISTÉ PAR ORDINATEUR ET DISPOSITIF DE COMMANDE DE DÉTERMINATION DE QUALITÉ DE BÉTON EXPOSÉ

(30) Priorität: 10.12.2019 DE 102019219269
(43) Veröffentlichungstag der Anmeldung: 19.10.2022
(73) Patentinhaber: PERI SE, 89264 Weißenhorn (DE)
(72) Erfinder: STAVES, Henning, 89264 Weißenhorn (DE); SPAN, Wolfgang, 89264 Weißenhorn (DE)
(74) Vertreter: Müller Schupfner & Partner Patent- und Rechtsanwaltspartnerschaft mbB
(86) Internationale Anmeldenummer: PCT/EP2020/080062
(87) Internationale Veröffentlichungsnummer: WO 2021/115673

(56) Entgegenhaltungen:
- EP-A1- 2 743 427
- EP-B1- 2 743 427
- KR-A- 20120 080 795
- KR-B1- 101 297 633

## Beschreibung

Die vorliegende Anmeldung beansprucht die Priorität der deutschen Patentanmeldung Nr. 10 2019 219 269.6, eingereicht am 10. Dezember 2019.

Die vorliegende Erfindung betrifft ein computergestütztes Verfahren sowie eine Steuereinrichtung zur Herstellung eines Betonbauteils mit einer Außenoberfläche in einer definierten Sichtbetonqualität mittels einer auf einer Baustelle oder einem Fertigteilwerk installierten Schalungsanordnung, in welcher ein geeigneter Frischbeton als Ausgangsmaterial eingefüllt werden soll. Ferner betrifft die Erfindung auch ein das Verfahren verkörperndes Computerprogramm, insbesondere für eine rechnergestützte Prognoseeinheit der Steuereinrichtung.

Das Einsatzgebiet der Erfindung erstreckt sich auf die Bautechnik und ist speziell auf die Herstellung von Sichtbeton gerichtet. Unter Sichtbeton sind Betonbauteile zu verstehen, deren als Ansichtsflächen dienenden Außenoberflächen Teil der architektonischen oder innenarchitektonischen Gebäudegestaltung sind. Im strengen Sinn ist die Bezeichnung Sichtbeton auf Bauteilflächen beschränkt, die bei der Herstellung Kontakt zur Schalungshaut einer für die Herstellung benötigten Schalungsanordnung hatten. Obwohl Außenoberflächen von Sichtbeton in vielen unterschiedlichen Ausprägungen und Herstellungstechniken existieren, beispielsweise gefärbt, steinmetzmäßig bearbeitet, gesäuert, gewaschen und dergleichen, sind dennoch all diese Außenoberflächen im Ursprung geschalte Flächen und zeigen ein mehr oder weniger durch die Schalhaut mitbestimmtes Aussehen. Bei der Herstellung von Sichtbeton stellt eine reproduzierbare Oberflächenqualität eine entscheidende Rolle, da das Endergebnis von recht vielen Einflussfaktoren abhängt.

### Stand der Technik

Aus dem "Merkblatt Sichtbeton" (Herausgeber: Deutscher Beton- und Bautechnik-Verein e.V. und Verein Deutscher Zementwerke, 53-seitige Ausgabe, 2004) gehen konkrete Sichtbetonklassen SB1 bis SB4 hervor, die in der Praxis als Qualitätsmaßstab dienen. Mit diesen Sichtbetonklassen SB1 bis SB4 sind technische Anforderungen und gestalterische Einzelkriterien hinsichtlich der Qualität der Schalungshaut, des Betonmaterials und der zu leistenden Arbeitssorgfalt und dergleichen festgelegt. Die Einhaltung dieser Einzelkriterien soll eine reproduzierbare Sichtbetonqualität erleichtern.

In der Praxis enthält die Leistungsbeschreibung für Sichtbeton - beispielsweise für einem glatten Sichtbeton - im Allgemeinen die Beschreibung der geforderten Flächenmerkmale, wie Sichtbetonklasse, glatt, mit nicht oder schwach saugender Schalung hergestellt und dergleichen, die Beschreibung der Flächenstruktur per Schalungsmusterplan und einige zusätzliche Forderungen hinsichtlich der Farbtönung der Flächen. Je nach dem gewünschten Aussehen können Angaben zur Oberflächenbearbeitung oder zu einer optionalen Einfärbung der Flächen hinzukommen. Die Sichtbetonklasse wählt der Planer aus einer Leistungsbeschreibungstabelle des "Merkblatt Sichtbeton" aus. Mit der Wahl und Festlegung der Sichtbetonklasse SB1 bis SB4 sind alle zu dieser Klasse gehörigen Flächenmerkmale sowie der einzuhaltende Zustand der Schalungshaut festgelegt.

Die oberflächliche Beschaffenheit der Schalungshaut hat dabei einen entscheidenden Einfluss auf das spätere Aussehen von Sichtbetonflächen. Dies gilt umso mehr, je weniger die gewünschte Gestaltung von den klassischen Merkmalen einer glatten, mit einer nicht saugenden Schalungshaut hergestellten Sichtbetonfläche abweichen soll. Brettschalungen aus unbehandeltem Holz, sägerau oder gehobelt, oder OSB-Platten geben der Sichtbetonfläche ein typisches Aussehen, können aber je nach verwendetem Holz oder Fabrikat sehr große Varianzen im späteren Aussehen der Fläche bewirken. Hilfreich für die Entscheidung über die Schalungshaut ist daher bislang das praktische Studium exemplarischer Flächen an bestehenden Gebäuden. Die Entscheidung für eine bestimmte Schalungshaut wird später, nach Baubeginn, gewöhnlich durch aufwendige Erprobungen getroffen. All dies erfordert auch einen recht hohen Planungsaufwand.

Hinsichtlich der Materialauswahl für den zu verwendenden Frischbeton wird die Farbgebung durch die Auswahl des Zements beeinflusst, beispielsweise Kalksteinzemente für hellere oder Schieferzemente für dunklere Oberflächen, welche in der jeweiligen Betonrezeptur festgelegt ist. Eine sehr helle, fast weiße Flächenfärbung ist nur durch den Einsatz von weißen Zementen zu erreichen. Auch farbiger Beton ist durch die Zugabe von Pigmenten möglich. Die Realisierung farbiger Außenoberflächen erfordert jedoch ein sehr hohes Maß an Sorgfalt bei der Bauausführung. Denn eine farbige Außenoberfläche ist gewöhnlich nicht in Sichtbetonqualität SB4 ausführbar, falls eine zu hohe Luftfeuchtigkeit herrscht. Ferner kann Niederschlagwasser auf der Schalhaut vor dem Befüllen der Schalungsanordnung mit Frischbeton zu späteren Schlieren auf der Außenoberfläche führen. Aus diesen Gründen wirken auch während der Bauausführung verschiedene weitere Einflussfaktoren auf die realisierbare Sichtbetonqualität ein.

Vor allem glatte, mit einer nicht saugenden Schalungsanordnung hergestellte Flächen können, wenn diese bei mittleren Tagestemperaturen unter 10°C hergestellt werden, störende dunkle Flecken zeigen. Die Verfärbungen können je nach Temperatur und Empfindlichkeit die randnahe Bewehrung nachbilden, fleckenartig auftreten oder auch ganze Bauteilbereiche, meist im unteren Teil einer Wandfläche und oft abgegrenzt durch abgezeichnete Einbaulagen, betreffen. Als Gegenmaßnahmen kann ein möglichst frühes Ausschalen diese Dunkelfleckigkeit vermeiden. Bislang basiert die Realisierung einer gewünschten Sichtbetonqualität auf Bauerfahrungen, welche je nach Baustelle und dem dort ausführenden Personal natürlich stark variieren können.

Zur Sicherstellung einer gewünschten Sichtbetonqualität wird im "Merkblatt Sichtbeton" das Anlegen von Erprobungsflächen empfohlen. Solche Erprobungsflächen dienen dazu, die unter den tatsächlichen Randbedingungen der Baustelle herstellbare Qualität festzustellen, das technische Vorgehen zu entwickeln und abzusichern. Diese Tests erhöhen zusätzlich den Bauaufwand.

Die Vorveröffentlichung KR 2012 0080795 A offenbart allgemein ein computergestütztes Verfahren zur Herstellung von Betonteilen mittels Schalungsanordnung, in welche ein Frischbeton als Ausgangsmaterial eingefüllt wird, wobei Daten über den Frischbeton bereitgestellt werden und aktuell physikalische Umweltdaten durch auf der Baustelle angeordnete Sensoren ermittelt werden, um die bereitgestellten und gemessenen verschiedenartigen Daten mit entsprechenden abgespeicherten historischen Daten ähnlicher Betonbauteile zwecks Qualitätssicherung zu vergleichen. Dies bezieht sich allerdings nicht auf den Aspekt einer konkret gewünschten Sichtbetonqualität und hierfür speziell relevante Daten, insbesondere auch hinsichtlich der Schalhautklasse der Schalungsanordnung.

Aus der EP 2 743 427 A1 gehen wiederverwendbare Schalungselemente mit integrierten Temperatursensoren hervor, womit die Aushärtung des Betons überwacht werden kann, um die Qualität des Sichtbetons zu verbessern.

Es ist daher die Aufgabe der vorliegenden Erfindung, eine technische Lösung zur Herstellung eines Betonbauteils in Sichtbetonqualität bereitzustellen, mit deren Hilfe eine möglichst reproduzierbar gleiche Oberflächenqualität einer in der Ausführungsplanung festgelegten Qualitätsklasse erzielbar ist.

### Offenbarung der Erfindung

Die Aufgabe wird hinsichtlich eines computergestützten Verfahrens durch Anspruch 1 gelöst. Der nebengeordnete Anspruch 10 gibt eine zur Durchführung dieses Verfahrens dienende Steuereinrichtung an und der Anspruch 14 beinhaltet ein das erfindungsgemäße Verfahren verkörperndes Computerprogramm, mit dem zumindest Teilschritte des Verfahrens ausführbar sind.

Die Erfindung schließt die verfahrenstechnische Lehre ein, dass zur Herstellung eines Betonbauteils mit einer Außenoberfläche in einer definierten Sichtbetonqualität SB1 bis SB4 oder einer anderen Klassifizierung mittels einer auf einer Baustelle installierten Schalungsanordnung, in welcher ein geeigneter Frischbeton als Ausgangsmaterial eingeführt wird, die folgenden Schritte umfasst:
- Bereitstellen von Daten über die Betonrezeptur und/oder Betonqualität des zur Baustelle gelieferten oder zu liefernden Frischbetons,
- Bereitstellen von Daten über die Schalhautklasse oder hierzu äquivalente Informationen der auf der Baustelle installierten Schalungsanordnung,
- Messen von aktuellen physikalischen Umweltdaten durch auf der Baustelle angeordnete Sensoren,
- Vergleichen der bereitgestellten und gemessenen verschiedenartigen Daten mit entsprechenden abgespeicherten historischen Daten ähnlicher Betonbauteile von bekannter Sichtbetonqualität SB1 bis SB4, um per
- Datenmustererkennung zu prognostizieren, mit welcher Sichtbetonqualität SB1 bis SB4 sich das herzustellende Betonbauteil unter den gegebenen Umständen realisieren lässt.

Somit basiert die erfindungsgemäße Lösung auf einer Bereitstellung der wesentlichen qualitätsrelevanten Informationen über das verwendete Material, das verwendete Werkzeug sowie den baustellenseitigen Umweltbedingungen, um diese verschiedenartigen Daten mit den Daten von Betonbauteilen von bereits bekannter Sichtbetonqualität SB1 bis SB4 zu vergleichen, welche aus vorangegangenen Bauvorhaben stammen. Denn sind deren einst bereitgestellten und gemessenen verschiedenartigen Daten identisch oder ähnlich zu den für das aktuell auszuführende Bauvorhaben bereitgestellten und gemessenen verschiedenartigen Daten, so kann prognostiziert werden, dass damit auch dieselbe Sichtbetonqualität SB1 bis SB4 erzielbar ist. Diese Datenmustererkennung wird umso präziser, je größer der für die Prognose verwertbare Datenvorrat ist.

Der Vorteil der Erfindung liegt darin, dass mit hoher Wahrscheinlichkeit eine gleichmäßig reproduzierbare Sichtbetonqualität erzielbar ist, wozu allein Erfahrungswerte eines manuellen Vorgehens schon aufgrund der Vielzahl der Einflussfaktoren nicht imstande wären. Zusätzlich lässt sich über eine entsprechende Dokumentation realisierter Sichtbetonqualitäten SB1 bis SB4 und den dieser zugrunde liegenden Daten, etwaigen unberechtigten Reklamationen entgegentreten oder bei beispielsweise falscher Betonrezeptur den eingetretenen Schaden dem tatsächlichen Verursacher zuordnen. Ferner ermöglicht die Prognose beispielsweise auch eine Feststellung, dass unter den gegebenen Umständen die geplante Sichtbetonqualität nicht realisierbar ist, beispielsweise weil zu alte Schalungselemente mit nicht hinreichender Ebenheit und zu hoher Saugfähigkeit installiert wurden. In diesem Falle kann infolge der Prognose die Schalungsanordnung ausgetauscht werden, um die geplante Sichtbetonqualität herstellen zu können. Somit liegt der Mehrwert der erfindungsgemäßen Lösung auch in der Logistik von Schalungselementen zum Verbau für Schalungsanordnungen, welche beispielsweise über Transpondertechnik bekannt ist, um ungeeignete Schalungselemente gegebenenfalls gegen geeignete Schalungselemente mit hinreichend ebener Schalhaut austauschen zu können. Ein durch Verwendung einer falschen Schalungsanordnung entstehender Schaden wird hierdurch vermieden.

Die im Rahmen der erfindungsgemäßen Lösung zu messenden physikalischen Umweltdaten sind vorzugsweise ausgewählt aus einer Datengruppe, umfassend Außentemperatur T, Luftfeuchtigkeit F, Niederschlag N sowie auch die Windgeschwindigeit auf der Baustelle, welche den Abbindungsprozess beeinflusst. Denn diese Umweltdaten haben einen entscheidenden Einfluss auf die Sichtbetonqualität. Natürlich lassen sich auch andere messtechnisch zu erfassende Umweltdaten zur Auswertung hinzuziehen, falls sich diese als qualitätsrelevant herausstellen.

Analog dasselbe gilt für die die Betonqualität bestimmenden Daten, welche sich aus der Betonrezeptur ergeben, beispielsweise die Körnung K der verwendeten Kiese und Sande, der Wassergehalt W des zum Mischen zugegebenen Wassers und die Materialtemperatur MT des zu verbauenden Frischbetons, welche maßgeblich die Topfzeit mitbestimmt. Die Materialtemperatur MT ist wesentlich von der Außentemperatur während des Transports des Frischbetons vom Betonmischwerk zur Baustelle abhängig.

Als weitere, die Schalungsanordnung betreffende Einflussfaktoren werden auch Schalungsdaten berücksichtigt, welche sich entweder sensortechnisch ermitteln lassen oder durch die Kenndaten des verwendeten Schalungselements bekannt sind. So lässt sich sensortechnisch beispielsweise die Ebenheit E der Schalhaut ermitteln, beispielsweise per Laserscan. Die altersbedingte Wassersaugfähigkeit S der Schalhaut lässt sich über die Anzahl der Einsätze sowie das Alter des Schalungselements feststellen und die Kenndaten des Schalungselements legt fest, wie groß der Schalungsstoß zwischen benachbarten Schalplatten ausfällt. Diese Schalungsdaten sind ebenfalls maßgeblich für die Erzielung einer geplanten Sichtbetonqualität.

All die vorstehenden Daten betreffen die Phase vor dem Verbau des gelieferten Frischbetons. Darüber hinaus sind auch Daten für die erzielbare Sichtbetonqualität maßgeblich, welche während des Verbaus des gelieferten Frischbetons in der Schalungsanordnung anfallen, wie beispielsweise Prozessparameter, die ausgewählt sind aus einer Parametergruppe, umfassend Verdichtungsgrad V des Frischbetons, Betonreife R und/oder die Schalzeit Z. Auch all diese Prozessparameter, welche größtenteils mit der Ausführungsplanung feststehen, können mit früheren abgespeichert hinterlegten Prozessparametern von Betonbauteilen mit bekannter Sichtbetonqualität verglichen werden, um auf diese Weise die Prognosesicherheit der realisierbaren Sichtbetonqualität SB1 bis SB4 zu erhöhen.

Gemäß einer weiteren die Erfindung verbessernden Maßnahme wird vorgeschlagen, dass nach dem Entschalen die tatsächlich realisierte Sichtbetonqualität SB1 bis SB4 über optische Messmittel zur Analyse der Außenoberfläche bestimmt wird, um diese mit der geplanten und/oder prognostizierten Sichtbetonqualität SB1 bis SB4 zu vergleichen. Hierüber lässt sich eine zuverlässige und präzise Qualitätsprüfung vornehmen, welche aufgrund der datenverarbeitungstechnischen Ausführung in einfacher Weise durchführbar und dokumentierbar ist. Die Analyse der Außenoberfläche erfolgt dabei per Bildauswertung, indem Farbverläufe, Strukturmerkmale und dergleichen mit den im "Merkblatt Sichtbeton" oder anderen Vorschriften definierten Kriterien vergleichen werden. Voraussetzung hierfür ist, dass die textliche Beschreibung der Eigenschaften der verschiedenen Sichtbetonklassen in eine zu Vergleichszwecken heranziehbare Bildinformation übersetzt wird.

Neben der Qualitätsprüfung können die im Zusammenhang mit der tatsächlich realisierten Sichtbetonqualität SB1 bis SB4 stehenden verschiedenartigen Daten auch als Trainingsdatensatz zum maschinellen Lernen in den Datenbestand der historischen Daten mit übernommen werden. Hierdurch wird der Datenbestand angereichert, was eine präzisere Vorhersagesicherheit für zukünftige Prognosen ermöglicht.

Das erfindungsgemäße Verfahren lässt sich vornehmlich auf einer rechnergestützten Steuereinrichtung durchführen, welche im Kern eine Prognoseeinheit zum Vergleichen der bereitgestellten und gemessenen verschiedenartigen Daten mit entsprechenden in einer Dokumentationsdatenbank abgespeicherten historischen Daten ähnlicher Betonbauteile von bekannter Sichtbetonqualität SB1 bis SB4 umfasst. An der Prognoseeinheit sind ebenfalls eine Materialdatenbank zum Bereitstellen von Daten über die Betonrezeptur und/oder Betonqualität des zur Baustelle gelieferten oder zu liefernden Frischbetons angeschlossen sowie eine Schalungslogistikdatenbank zum Bereitstellen von Daten über die zumindest Schalhautklasse der auf der Baustelle installierten Schalungsanordnung. Außerdem gehen die Messwerte der verschiedenen Sensoren zum Messen von aktuellen physikalischen Umweltdaten an die Prognoseeinheit, welche ausgehend von den Eingangsdaten per Datenmustererkennung eine stochastische Prognose ausgibt, mit welcher Sichtbetonqualität SB1 bis SB4 sich das herzustellende Betonbauteil unter den gegebenen Umständen realisieren lässt.

Eine der Prognoseeinheit nachgeschaltete Analyseeinheit ist gemäß einer weiteren die erfindungsgemäße Lösung verbessernden Maßnahme vorgesehen, um anhand der messtechnisch erfassten Außenoberfläche die tatsächlich realisierbare Sichtbetonqualität SB 1 bis SB4 mit der geplanten und/oder prognostizierten Sichtbetonqualität zu Prüfzwecken zu vergleichen. Diese Qualitätsprüfung erfolgt nach dem Entschalen des Betonbauteils.

Zudem wird vorgeschlagen, dass die Analyseeinheit aus den Bilddaten der Außenoberflächen Trainingsdatensätze zur Klassifizierung von Sichtbetonqualitäten SB 1 bis SB4 erzeugt, um damit den Datenbestand der Dokumentationsdatenbank für zukünftige Prognosen anzureichern.

### Detailbeschreibung anhand der Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Darstellung einer Steuereinrichtung zur Herstellung eines Betonbauteils in Sichtbetonqualität auf Prognosebasis im Zusammenwirken mit Planungsdaten sowie der Baustelleneinrichtung, und
- Fig. 2: einen Ablaufplan des mit der Steuereinrichtung ausgeführten Verfahrens zur Herstellung des Betonbauteils.

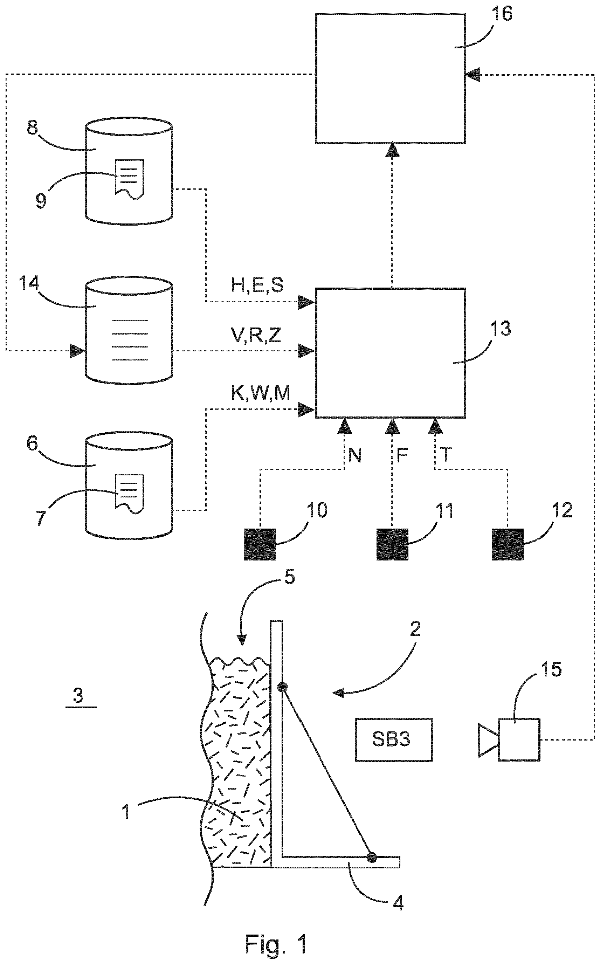

Gemäß Fig. 1 umfasst eine Steuereinrichtung zur Herstellung eines Betonbauteils 1 mit einer Außenoberfläche 2 in einer definierten Sichtbetonqualität, hier SB3, mittels einer auf der Baustelle 3 installierten Schalungsanordnung 4 für hierin einzufüllenden Frischbeton 5 im Wesentlichen eine Materialdatenbank 6 zur Bereitstellung von Daten über die Betonrezeptur 7 des auf die Baustelle 3 gelieferten zu verbauenden Frischbetons 5. Daneben existiert eine Schalungslogistikdatenbank 8, welche über einem der Schalungsanordnung 4 zugeordneten Schalungsdatensatz 9 Daten von zumindest der Schalhautklasse H der auf der Baustelle 3 installierten Schalungsanordnung 4 liefert.

Außerdem messen mehrere Sensoren 10 bis 12 aktuelle physikalische Umweltdaten auf der Baustelle 3. Dabei misst der Sensor 10 aktuelle Niederschläge N, beispielsweise Nieselregen, Starkregen und dergleichen. Der Sensor 11 misst die aktuelle Luftfeuchtigkeit F auf der Baustelle 3 und der Sensor 12 dient zum Messen der aktuellen Außentemperatur T auf der Baustelle 3. All diese gemessenen Daten werden gemeinsam mit den über die Datenbanken bereitgestellten Daten eingangsseitig einer Prognoseeinheit 13 zugeführt. Die Prognoseeinheit 13 vergleicht die bereitgestellten und gemessenen verschiedenartigen Daten mit entsprechenden in einer Dokumentationsdatenbank 14 abgespeicherten historischen Daten ähnlicher Bauteile 1' von bekannter Sichtbetonqualität, um per Datenmustererkennung zu prognostizieren, mit welcher Sichtbetonqualität sich das herzustellende Bauteil 1 unter den gegebenen Umständen realisieren lässt. Die gegebenen Umstände werden durch die vorstehend erwähnten bereitgestellten und gemessenen verschiedenartigen Daten definiert.

Nach dem Entschalen des Betonbauteils 1 wird die Außenoberfläche 2 des hergestellten Betonbauteils 1 hinsichtlich der prognostizierten Sichtbetonqualität SB3 geprüft. Dies erfolgt über eine 3D-Kameraeinheit 15, deren eingemessene Bildinformationen an eine Analyseeinheit 16 übertragen werden. Die Analyseeinheit 16 vergleicht anhand der Bilddaten der messtechnisch erfassten Außenoberfläche 2 die tatsächlich realisierte Sichtbetonqualität mit der prognostizierten Sichtbetonqualität SB3, welche regelmäßig auch der geplanten Sichtbetonqualität SB3 entspricht. Ansonsten werden zunächst Umweltbedingungen geändert, beispielsweise auf eine andere Betonrezeptur umgestellt.

Außerdem erzeugt die Analyseeinheit 16 aus den Bilddaten der Außenoberfläche 2 einen Trainingsdatensatz zur Klassifizierung von Sichtbetonqualitäten. Ist die Sichtbetonqualität SB3 bestätigt, so können die hiermit in Verbindung stehenden bereitgestellten Daten aus der Materialdatenbank 6, der Schalungsdatenbank 8 sowie mit den über die Sensoren 10 bis 12 gemessenen Daten als Trainingsdatensatz der Dokumentationsdatenbank 14 zugeführt werden, um deren Datenbestand anzureichern. Hierdurch lassen sich zukünftige Prognosen präziser treffen.

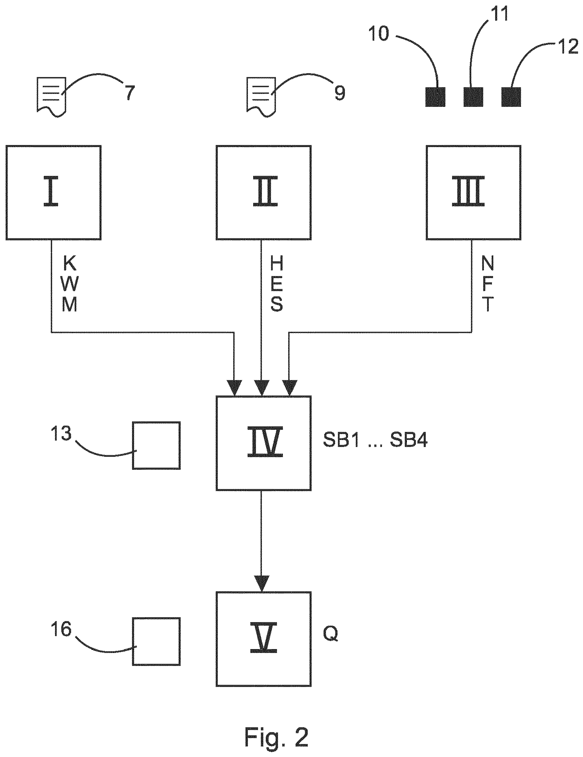

Die Fig. 2 veranschaulicht die Schrittabfolge des computergestützten Verfahrens zur Herstellung eines Betonbauteils 1 mithilfe der vorstehend beschriebenen Steuereinrichtung.

Für die zu treffende Prognose hinsichtlich einer realisierenden Sichtbetonqualität SB1 bis SB4 gemäß "Merkblatt Sichtbeton" werden in einem ersten Schritt I zunächst Daten über die Betonrezeptur 7 des zu verbauenden Frischbetons bereitgestellt. Diese Daten umfassen die Körnung K, den Wassergehalt W sowie die Materialtemperatur M des zu verbauenden Frischbetons, der hier aus den Rezepturvorschriften selektiert wird.

In einem parallelen Schritt II werden Daten über die auf der Baustelle installierten Schalungsanordnung bereitgestellt, welche aus der hierzu hinterlegten Typenbeschreibung sowie den Lifecycle-Daten des Schalungsdatensatzes 9 entstammen. Dies betrifft hauptsächlich die der Schalungsanordnung zuzuordnende Schalhautklasse H, welche die Sichtbetonoberfläche maßgeblich beeinflusst, aber auch die Ebenheit E der Schalhaut sowie die altersbedingte Wassersaugfähigkeit S.

Neben diesen aus Planungs- oder Dokumentationsdaten bereitgestellten Daten werden auch aktuell physikalische Umweltdaten in einem Schritt III auf der Baustelle gemessen. Hierzu dient ein Sensor 10 zum Messen von Niederschlag N. Ein Sensor 11 misst die aktuelle Luftfeuchtigkeit F und ein Sensor 12 misst die aktuelle Außentemperatur T auf der Baustelle.

All diese bereitgestellten und gemessenen verschiedenartigen Daten werden anschließend in einem Schritt IV durch eine Prognoseeinheit mit den entsprechenden abgespeicherten historischen Daten ähnlicher Betonteile von bekannten Sichtbetonqualitäten verglichen. Dies erfolgt mit einer rechnergestützten Prognoseeinheit 13 per Datenmustererkennung. Dabei werden die historischen Daten, welche zum Mustervergleich herangezogen werden, aus einer Dokumentationshistorie vergangener Bauvorhaben genutzt und es lässt sich auf diese Weise voraussagen, mit welcher Sichtbetonqualität sich das aktuell herzustellende Betonbauteil unter den gegebenen Umständen realisieren lässt.

In einem zusätzlichen Schritt V wird nach dem Entschalen des Betonbauteils analysiert, ob die realisierte Außenoberfläche 2 der prognostizierten und damit geplanten Sichtbetonqualität SB3 entspricht. Dies erfolgt über die vorstehend erläuterten optischen Messmittel.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass die Prognose der realisierenden Sichtbetonqualität auf weiteren bereitgestellten oder gemessenen Daten basiert, wie beispielsweise auf Prozessparametern während des Verbaus des Frischbetons 5. So können beispielsweise dessen schichtweise Verdichtungsgrad V die Betonreife R sowie die Schalzeit Z zur Erweiterung des Datensatzes für die Datenmustererkennung herangezogen werden. Andererseits braucht der der Datenmustererkennung zugrundeliegende Datensatz nicht alle die vorstehenden bereitgestellten und verschiedenartigen Daten umfassen; eine Teilauswahl hiervon ist hinreichend, sofern sich hieraus eine treffende Prognose über die realisierbare Sichtbetonqualität SB1 bis SB4 treffen lässt.

### Bezugszeichenliste

- 1: Betonbauteil
- 2: Außenoberfläche
- 3: Baustelle
- 4: Schalungsanordnung
- 5: Frischbeton
- 6: Materialdatenbank
- 7: Betonrezeptur
- 8: Schalungslogistikdatenbank
- 9: Schalungsdatensatz
- 10: erster Sensor
- 11: zweiter Sensor
- 12: dritter Sensor
- 13: Prognoseeinheit
- 14: Dokumentationsdatenbank
- 15: 3D-Kameraeinheit
- 16: Analyseeinheit

- SB1 ... SB4: Sichtbetonqualitäten
- T: Außentemperatur
- F: Luftfeuchtigkeit
- N: Niederschlag
- K: Körnung
- W: Wassergehalt
- M: Materialtemperatur
- H: Schalhautklasse
- E: Ebenheit
- S: Wassersaugfähigkeit
- V: Verdichtungsgrad
- R: Betonreife
- Z: Schalzeit

## Patentansprüche

1. Computergestütztes Verfahren zur Herstellung eines Betonbauteils (1) mit mindestens einer Außenoberfläche (2) in einer definierten Sichtbetonqualität (SB1 - SB4) mittels einer auf einer Baustelle (3) oder in einem Fertigteilwerk installierten Schalungsanordnung (4), in welche ein Frischbeton (5) als Ausgangsmaterial eingefüllt wird, umfassend die folgenden Schritte:
- Bereitstellen (I) von Daten über die Betonrezeptur (7) und/oder Betonqualität des zur Baustelle (3) gelieferten oder zu liefernden Frischbetons (5),
- Bereitstellen (II) von Daten über die Schalhautklasse (H) der auf der Baustelle (3) installierten Schalungsanordnung (4),
- Messen (III) von aktuellen physikalischen Umweltdaten durch auf der Baustelle (3) angeordnete Sensoren (10, 11, 12),
- Vergleichen (IV) der bereitgestellten und gemessenen verschiedenartigen Daten mit entsprechenden abgespeicherten historischen Daten ähnlicher Betonbauteile (1') von bekannter Sichtbetonqualität (SB1 - SB4), um per
- Datenmustererkennung zu prognostizieren, mit welcher Sichtbetonqualität (SB 1 - SB4) sich das herzustellende Betonbauteil (1) unter den gegebenen Umständen realisieren lässt.

2. Verfahren nach Anspruch 1,
**dadurch gekennzeichnet, dass** die prognostizierte Sichtbetonqualität (SB1 - SB4) mit der geplanten Sichtbetonqualität (SB1 - SB4) verglichen wird, um vor der Realisierung etwaige Abweichungen zu erkennen.

3. Verfahren nach Anspruch 1,
**dadurch gekennzeichnet, dass** die physikalischen Umweltdaten ausgewählt sind aus einer Datengruppe, umfassend: Außentemperatur (T), Luftfeuchtigkeit (F), Niederschlag (N), Windgeschwindigkeit.

4. Verfahren nach Anspruch 1,
**dadurch gekennzeichnet, dass** als die Betonqualität bestimmenden Daten die Körnung (K), der Wassergehalt (W) und/oder die Materialtemperatur (M) des zu verbauenden Frischbetons (5) mit berücksichtigt werden.

5. Verfahren nach Anspruch 1,
**dadurch gekennzeichnet, dass** als die Schalungsanordnung (4) bestimmenden Daten außerdem die sensortechnisch gemessene Ebenheit (E) der Schalhaut der Schalungsanordnung (4), deren altersbedingte Wassersaugfähigkeit (S) und/oder der Schalungsstoß zwischen benachbarten Schalplatten der Schalungsanordnung (4) mit berücksichtigt werden.

6. Verfahren nach Anspruch 1,
**dadurch gekennzeichnet, dass** zum Verbau des gelieferten Frischbetons (5) in der Schalungsanordnung (4) auf abgespeichert hinterlegte Prozessparameter der als Vergleichsmaßstab herangezogenen Betonbauteile (1') von bekannter Sichtbetonqualität (SB1 - SB4) zurückgegriffen wird.

7. Verfahren nach Anspruch 5,
**dadurch gekennzeichnet, dass** die Prozessparameter ausgewählt sind aus einer Parametergruppe, umfassend: Verdichtungsgrad (V) des Frischbetons (5), Betonreife (R) und/oder dessen Schalzeit (Z).

8. Verfahren nach Anspruch 1,
**dadurch gekennzeichnet, dass** nach dem Entschalen die tatsächlich realisierte Sichtbetonqualität (SB1 - SB4) über optische Messmittel zur Analyse (V) der Außenoberfläche (2) bestimmt wird, um diese mit der geplanten und/oder prognostizierten Sichtbetonqualität (SB1 - SB4) zu vergleichen.

9. Verfahren nach Anspruch 1,
**dadurch gekennzeichnet, dass** die im Zusammenhang mit der tatsächlich realisierten Sichtbetonqualität (SB1 - SB4) stehenden verschiedenartigen Daten als Trainingsdatensatz zum maschinellen Lernen in den Datenbestand der historischen Daten mit übernommen werden.

10. Steuereinrichtung zur Herstellung eines Betonbauteils (1) mit einer Außenoberfläche (2) in einer definierten Sichtbetonqualität (SB1 - SB4) mittels einer auf einer Baustelle (3) oder in einem Fertigteilwerk installierten Schalungsanordnung (4) für hierin einzufüllenden Frischbeton (5), wobei die Steuereinrichtung zur Durchführung des Verfahrens nach einem der vorstehenden Ansprüche die folgenden Komponenten umfasst:
- eine Materialdatenbank (6) zum Bereitstellen von Daten über die Betonrezeptur (7) und/oder Betonqualität des zur Baustelle (3) gelieferten oder zu liefernden Frischbetons (5),
- eine Schalungslogistikdatenbank (8) zum Bereitstellen von Daten über die zumindest Schalhautklasse (H) der auf der Baustelle (3) installierten Schalungsanordnung (4),
- mehrere Sensoren (10, 11, 12) zum Messen von aktuellen physikalischen Umweltdaten auf der Baustelle (3),
- eine Prognoseeinheit (13) zum Vergleichen der bereitgestellten und gemessenen verschiedenartigen Daten mit entsprechenden in einer Dokumentationsdatenbank (14) abgespeicherten historischen Daten ähnlicher Betonbauteile (1') von bekannter Sichtbetonqualität (SB1 - SB4), um per Datenmustererkennung zu prognostizieren, mit welche Sichtbetonqualität (SB1 - SB4) sich das herzustellende Betonbauteil (1) unter den gegebenen Umständen realisieren lässt.

11. Steuereinrichtung nach Anspruch 10,
**dadurch gekennzeichnet, dass** als optisches Messmittel für die Außenoberfläche (2) eine 3D-Kameraeinheit (15) oder ein Oberflächen-Laserscanner die tatsächlich realisierte Sichtbetonqualität (SB1 - SB4) erfasst.

12. Steuereinrichtung nach Anspruch 10,
**dadurch gekennzeichnet, dass** eine Analyseeinheit (16) anhand der messtechnisch erfassten Außenoberfläche (2) die tatsächlich realisierte Sichtbetonqualität (SB1 - SB4) mit der geplanten und/oder prognostizierten Sichtbetonqualität (SB1 - SB4) vergleicht.

13. Steuereinrichtung nach Anspruch 12,
**dadurch gekennzeichnet, dass** die Analyseeinheit (16) aus den Bilddaten der Außenoberflächen (2) Trainingsdatensätze zur Klassifizierung von Sichtbetonqualitäten (SB1 - SB4) erzeugt, um damit den Datenbestand der Dokumentationsdatenbank (14) für zukünftige Prognosen anzureichern.

14. Computerprogramm, umfassend Befehle, die bewirken, dass die Steuereinrichtung des Anspruchs 10 die Verfahrensschritte nach Anspruch 1 ausführt.

## Claims

1. Computer-implemented method for producing a concrete component (1) with at least one outer surface (2) in a defined exposed concrete quality (SB1 - SB4) by means of a formwork arrangement (4) installed at a construction site (3) or in a precast plant, into which formwork arrangement a fresh concrete (5) is filled as starting material, comprising the following steps:
- providing (I) data on the concrete formulation (7) and/or concrete quality of the fresh concrete (5) delivered or to be delivered to the construction site (3),
- providing (II) data on the formwork skin class (H) of the formwork arrangement (4) installed at the construction site (3),
- measuring (III) actual physical environmental data by sensors (10, 11, 12) arranged on the construction site (3),
- comparing (IV) the provided and measured dissimilar data with corresponding stored historical data of similar concrete components (1') of known exposed concrete quality (SB1 - SB4) in order to predict via
- data pattern recognition to predict with which exposed concrete quality (SB1 - SB4) the concrete component (1) to be produced can be realized under the given circumstances.

2. Method according to claim 1, **characterized in that** the predicted exposed concrete quality (SB1 - SB4) is compared with the planned exposed concrete quality (SB1 - SB4) in order to detect any deviations before realization.

3. Method according to claim 1, **characterized in that** the physical environmental data are selected from a data group comprising: outdoor temperature (T), humidity (F), precipitation (N), wind speed.

4. Method according to claim 1, **characterized in that** the grain size (K), the water content (W) and/or the material temperature (M) of the fresh concrete (5) to be placed are taken into account as data determining the concrete quality.

5. Method according to claim 1, **characterized in that**, as data determining the formwork arrangement (4), the evenness (E) of the formwork skin of the formwork arrangement (4) measured by sensor technology, its age-related water absorption capacity (S) and/or the formwork joint between adjacent formwork panels of the formwork arrangement (4) are also taken into account.

6. Method according to claim 1, **characterized in that** stored process parameters of the concrete components (1') of known fair-faced concrete quality (SB1 - SB4) used as a standard of comparison are used for the shoring of the fresh concrete (5) supplied in the shuttering arrangement (4).

7. Method according to any one of claims 5, **characterized in that** the process parameters are selected from a parameter group comprising: degree of compaction (V) of the fresh concrete (5), concrete maturity (R) and/or its forming time (Z).

8. Method according to claim 1, **characterized in that**, after demolding, the actually realized exposed concrete quality (SB1 - SB4) is determined by optical measuring means for analyzing (V) the outer surface (2) in order to compare it with the planned and/or predicted exposed concrete quality (SB1 - SB4).

9. Method according to claim 1, **characterized in that** the various data associated with the actually realized exposed concrete quality (SB1 - SB4) are included in the data stock of the historical data as a training data set for machine learning.

10. Control device for producing a concrete component (1) with an outer surface (2) in a defined exposed concrete quality (SB1 - SB4) by means of a formwork arrangement (4) installed on a construction site (3) or in a precast plant for fresh concrete (5) to be filled therein, wherein the control device for carrying out the method according to any one of the preceding claims comprises the following components:
- a material database (6) for providing data on the concrete formulation (7) and/or concrete quality of the fresh concrete (5) delivered or to be delivered to the construction site (3),
- a formwork logistics database (8) for providing data on at least the formwork skin class (H) of the formwork arrangement (4) installed at the construction site (3),
- a plurality of sensors (10, 11, 12) for measuring current physical environmental data at the construction site (3),
- a prognosis unit (13) for comparing the various data provided and measured with corresponding historical data of similar concrete components (1') of known exposed concrete quality (SB1 - SB4) stored in a documentation database (14), in order to prognosticate by data pattern recognition with which exposed concrete quality (SB1 - SB4) the concrete component (1) to be produced can be realized under the given circumstances.

11. Control device according to any one of claims 10, **characterized in that** a 3D camera unit (15) or a surface laser scanner detects the actually realized fair-faced concrete quality (SB1 - SB4) as optical measuring means for the outer surface (2).

12. Control device according to any one of claims 10, **characterized in that** an analysis unit (16) compares the actually realized exposed concrete quality (SB1 - SB4) with the planned and/or predicted exposed concrete quality (SB1 - SB4) on the basis of the metrologically recorded outer surface (2).

13. Control device according to any one of claims 12, **characterized in that** the analysis unit (16) generates training data sets for classifying exposed concrete qualities (SB1 - SB4) from the image data of the outer surfaces (2), in order to enrich the data stock of the documentation database (14) for future forecasts therewith.

14. Computer program comprising instructions causing the control device of claim 10 to perform the method steps according to claim 1.

## Revendications

1. Procédé assisté par ordinateur pour la fabrication d'un élément de construction en béton (1) ayant au moins une surface extérieure (2) d'une qualité de béton apparent définie (SB1 - SB4) au moyen d'un ensemble de coffrage (4) installé sur un chantier (3) ou dans une usine de préfabrication, dans lequel un béton frais (5) est versé comme matériau de départ, comprenant les étapes suivantes consistant à :
- fournir (1) des données concernant la formulation de béton (7) et/ou la qualité de béton du béton frais (5) livré ou à livrer au chantier (3),
- fournir (II) des données concernant la classe de peau de coffrage (H) de l'ensemble de coffrage (4) installé sur le chantier (3),
- mesurer (III) des données physiques environnementales actuelles par des capteurs (10, 11, 12) disposés sur le chantier (3),
- comparer (IV) les données de différents types fournies et mesurées avec des données historiques mémorisées correspondantes d'éléments de construction en béton (1') similaires de qualité de béton apparent connue (SB1 - SB4), afin de
- pronostiquer, par reconnaissance de motifs de données, la qualité de béton apparent (SB1 - SB4) avec quelle l'élément de construction en béton (1) à fabriquer peut être réalisé dans les circonstances données.

2. Procédé selon la revendication 1,
**caractérisé en ce que** la qualité de béton apparent (SB1 - SB4) pronostiquée est comparée avec la qualité de béton apparent (SB1 - SB4) planifiée, afin de reconnaître d'éventuels écarts avant la réalisation.

3. Procédé selon la revendication 1,
**caractérisé en ce que** les données physiques environnementales sont sélectionnées parmi un groupe de données comprenant : la température extérieure (T), l'humidité de l'air (F), les précipitations (N), la vitesse du vent.

4. Procédé selon la revendication 1,
**caractérisé en ce que** l'on prend en compte, en tant que données déterminant la qualité du béton, la granulométrie (K), la teneur en eau (W) et/ou la température du matériau (M) du béton frais (5) à mettre en place.

5. Procédé selon la revendication 1,
**caractérisé en ce que** l'on prend en outre en compte, en tant que données déterminant l'ensemble de coffrage (4), la planéité (E) de la peau de coffrage de l'ensemble de coffrage (4) mesurée par capteur, sa capacité d'absorption d'eau (S) due au vieillissement et/ou le joint de coffrage entre des panneaux de coffrage voisins de l'ensemble de coffrage (4).

6. Procédé selon la revendication 1,
**caractérisé en ce que**, pour la mise en place du béton frais livré (5) dans l'ensemble de coffrage (4), on a recours à des paramètres de processus mémorisés des éléments de construction en béton (1'), utilisés comme référence de comparaison, de qualité de béton apparent connue (SB1 - SB4).

7. Procédé selon la revendication 5,
**caractérisé en ce que** les paramètres de processus sont sélectionnés parmi un groupe de paramètres comprenant : le taux de compactage (V) du béton frais (5), la maturité du béton (R) et/ou son temps de coffrage (Z).

8. Procédé selon la revendication 1,
**caractérisé en ce qu'**après le décoffrage, la qualité de béton apparent (SB1 - SB4) effectivement réalisée est déterminée par des moyens de mesure optiques pour l'analyse (V) de la surface extérieure (2), afin de la comparer avec la qualité de béton apparent (SB1 - SB4) planifiée et/ou pronostiquée.

9. Procédé selon la revendication 1,
**caractérisé en ce que** les données de différents types en rapport avec la qualité de béton apparent (SB1 - SB4) effectivement réalisée sont reprises dans le stock de données des données historiques en tant que jeu de données d'entraînement pour l'apprentissage automatique.

10. Dispositif de commande pour la fabrication d'un élément de construction en béton (1) ayant une surface extérieure (2) d'une qualité de béton apparent définie (SB1 - SB4) au moyen d'un ensemble de coffrage (4), installé sur un chantier (3) ou dans une usine de préfabrication, pour du béton frais (5) à y verser, le dispositif de commande comprenant les composants suivants pour la mise en oeuvre du procédé selon l'une des revendications précédentes :
- une base de données de matériaux (6) pour fournir des données concernant la formulation de béton (7) et/ou la qualité de béton du béton frais (5) livré ou à livrer au chantier (3),
- une base de données de logistique de coffrage (8) pour fournir des données concernant au moins la classe de peau de coffrage (H) de l'ensemble de coffrage (4) installé sur le chantier (3),
- plusieurs capteurs (10, 11, 12) pour mesurer des données physiques environnementales actuelles sur le chantier (3),
- une unité de pronostic (13) pour comparer les données de différents types fournies et mesurées avec des données historiques correspondantes, mémorisées dans une base de données de documentation (14), d'éléments de construction en béton (1') similaires de qualité de béton apparent connue (SB1 - SB4), afin de pronostiquer, par reconnaissance de motifs de données, la qualité de béton apparent (SB1 - SB4) avec laquelle l'élément de construction en béton (1) à fabriquer peut être réalisé dans les circonstances données.

11. Dispositif de commande selon la revendication 10,
**caractérisé en ce que**, en tant que moyen de mesure optique pour la surface extérieure (2), une unité de caméra 3D (15) ou un scanner laser de surface détecte la qualité de béton apparent (SB1 - SB4) effectivement réalisée.

12. Dispositif de commande selon la revendication 10,
**caractérisé en ce qu'**une unité d'analyse (16) compare, à l'aide de la surface extérieure (2) détectée par voie de mesure, la qualité de béton apparent (SB1 - SB4) effectivement réalisée avec la qualité de béton apparent (SB1 - SB4) planifiée et/ou pronostiquée.

13. Dispositif de commande selon la revendication 12,
**caractérisé en ce que** l'unité d'analyse (16) génère, à partir des données d'image des surfaces extérieures (2), des jeux de données d'entraînement pour la classification des qualités de béton apparent (SB1 - SB4), afin d'enrichir ainsi le stock de données de la base de données de documentation (14) pour des pronostics futurs.

14. Programme d'ordinateur comprenant des instructions qui font que le dispositif de commande de la revendication 10 exécute les étapes de procédé selon la revendication 1.
